# EUROPÄISCHE PATENTSCHRIFT

(11) **EP 0 822 482 B1**
(45) Veröffentlichungstag und Bekanntmachung des Hinweises auf die Patenterteilung: **16.07.2003**
(21) Anmeldenummer: 97202275.0
(22) Anmeldetag: 21.07.1997
(51) Int. Cl.: G06F 9/318, G06F 9/38

(54) **Datenverarbeitungseinrichtung mit einem Mikroprozessor und einer zusätzlichen Recheneinheit**
Data processing device with a microprocessor and an additional computing unit
Dispositif de traitement de données avec microprocesseur et unité de calcul additionnelle

(30) Priorität: 31.07.1996 DE 19630861
(43) Veröffentlichungstag der Anmeldung: 04.02.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Wille, Thomas, Dr., Röntgenstrasse 24, 22335 Hamburg (DE); Malzahn, Ralf, Röntgenstrasse 24, 22335 Hamburg (DE); Quisqater, Jean-Jaques, Prof., Röntgenstrasse 24, 22335 Hamburg (DE); Ferreira, Ronald, Röntgenstrasse 24, 22335 Hamburg (DE)
(74) Vertreter: Peters, Carl Heinrich, Dipl.-Ing.

(56) Entgegenhaltungen:
- EP-A- 0 240 870
- EP-A- 0 690 373
- US-A- 5 121 351
- US-A- 5 163 154
- S B FURBER: "COPROCESSOR DATA TRANSFER INSTRUCTIONS" VLSI RISC ARCHITECTURE AND ORGANIZATION, 1989, Seiten 261-265, XP002061358 FURBER S B

## Beschreibung

Die Erfindung bezieht sich auf eine Datenverarbeitungseinrichtung mit einem Mikroprozessor und einer zusätzlichen Recheneinheit, sowie auf einen tragbaren Datenträger mit einer derartigen Datenverarbeitungsvorrichtung.

Derartige Datenverarbeitungseinrichtungen, die insbesondere in einem einzigen Halbleiterchip integriert sind, sind grundsätzlich bekannt, beispielsweise aus dem Datenblatt zu der integrierten Schaltung mit der Bezeichnung P83C852 von Philips. Diese integrierte Schaltung wird vorzugsweise in tragbare kartenförmige Datenträger, z.B. mit dem Format einer Scheckkarte, eingebaut und dienen vorzugsweise dazu, Daten nach einem unsymmetrischen Verschlüsselungsverfahren zu verschlüsseln oder derartige Daten zu entschlüsseln. Dabei müssen unter anderem Datenblöcke mit einer Schlüsselzahl modulo einer Konstanten exponenziert werden, wobei die Konstante eine hohe Stellenzahl aufweist, um eine möglichst sichere Verschlüsselung zu erreichen. Die dafür notwendigen Rechenschritte können grundsätzlich auch mit dem Mikroprozessor durchgeführt werden, jedoch würde dies viel zu lange Zeit erfordern, so daß zu dem Mikroprozessor eine zusätzliche spezielle Recheneinheit auf dem Chip integriert ist, die für die zum Verschlüsseln erforderlichen Rechenschritte optimal ausgelegt ist. Die Verbindung zwischen Mikroprozessor und zusätzlicher Recheneinheit erfolgt dabei über besondere Register, die die Datenübertragung steuern, sowie über wenigstens einen Datenspeicher, auf den sowohl Mikroprozessor als auch zusätzliche Recheneinheit zugreifen.

Nachteilig bei diesen bekannten integrierten Schaltungen mit Mikroprozessor und zusätzlicher Recheneinheit ist es, daß nach der Durchführung eines Verarbeitungsschritts oder eines Verarbeitungszyklus durch die zusätzliche Recheneinheit der Mikroprozessor die Register wieder mit neuen Werten für zumindest zum Teil neue Operanden laden muß, mit denen dann der nächste Verarbeitungszyklus startet. Dies bedingt einen erheblichen Zeitverlust, so daß die gesamte Datenverarbeitungsanordnung insbesondere bei längeren Schlüsselzahlen zu viel Zeit für die Datenverschlüsselung oder -entschlüsselung benötigt.

Aufgabe der Erfindung ist es, eine Datenverarbeitungseinrichtung mit einem Mikroprozessor und einer zusätzlichen Recheneinheit anzugeben, bei der die Recheneinheit nach Abschluß eines Verarbeitungszyklus möglichst ohne Zeitverlust sofort mit dem nächsten Verarbeitungszyklus für neue Daten beginnen kann.

US-A-5,121,351 betrifft eine Datenverarbeitungseinrichtung der im Oberbegriff des Anspruchs 1 angegebenen Art und befasst sich dem Prinzip nach auch mit der genannten Aufgabe, gibt jedoch eine aufwändigere Lösung für Vektoroperationen an, die jeweilige Warteschlangen der ersten und zweiten Register sowie eine Warteschlange weiterer Inkrementregister in einer DMA-Steuereinheit vorsieht, welche von der CPU initialisiert wird.

Die genannte Aufgabe wird erfindungsgemäß im wesentlichen dadurch gelöst, daß die Register zur Steuerung der Datenübertragung und zur Befehlsübertragung als wenigstens zwei Sätze von Registern vorgesehen werden. Die Ausgänge dieser Register werden durch den Inhalt eines weiteren Registers umgeschaltet, so daß jeweils nur ein Satz von Registern wirksam ist. In die nicht wirksamen Register können jedoch jederzeit vom Mikroprozessor neue Daten eingeschrieben werden, so daß diese Daten bereitstehen, wenn die Recheneinheit einen Verarbeitungszyklus abgeschlossen hat, und sofort mit dem nächsten Verarbeitungszyklus begonnen werden kann. Dadurch wird ein Verschlüsselungs- oder Entschlüsselungsvorgang erheblich beschleunigt.

Bei der Verschlüsselung von Daten werden lange Operanden mit vielen Stellen benötigt, während die in solchen integrierten Schaltungen enthaltenen Speicher nur für Datenwörter begrenzter Länge, häufig für Datenwörter mit acht Bit, ausgelegt sind. Für einen Verarbeitungszyklus der Recheneinheit sind dann mehrere Datenwörter des Speichers erforderlich, die an verschiedenen Adressen stehen. Um ein wiederholtes Laden der Register für die Steuerung der Datenübertragung zu vermeiden, werden nach einer Ausgestaltung der Erfindung von den zu verarbeitenden Operanden nicht nur deren Adresse bzw. Anfangsandresse, sondern auch deren Länge durch den Inhalt der Register für die Steuerung der Datenübertragung bestimmt. Die Länge kann dabei beispielsweise als Anzahl von Speicherdatenwörtern angegeben werden. Dadurch ist eine sehr einfache und kurze Angabe der nacheinander zu verarbeitenden Operanden möglich.

Ausführungsbeispiele der Erfindung werden nachstehend anhand der Zeichnung näher erläutert. Es zeigen:
Fig. 1 ein schematisches Blockschaltbild der gesamten Datenverarbeitungsanordnung,
Fig. 2 schematisch die Steuerung der Recheneinheit durch drei Sätze von Registern.

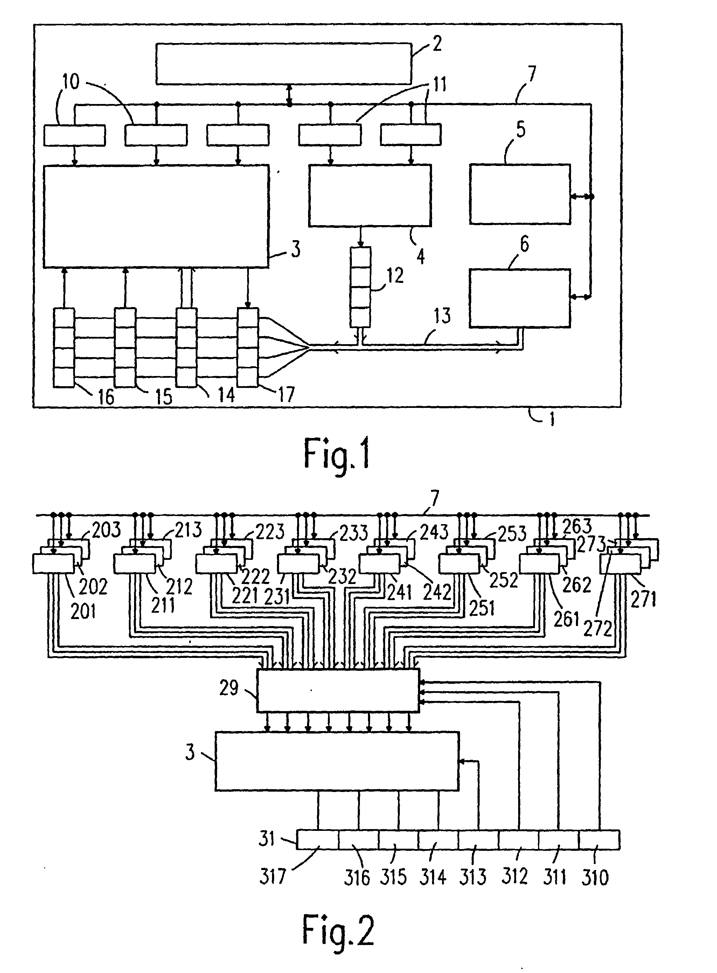

In Fig. 1 enthält die Datenverarbeitungsanordnung 1 einen Mikroprozessor 2 sowie eine spezielle Recheneinheit 3 für bestimmte Berechnungen, deren Durchführung mit Hilfe des Mikroprozessors 2 zeitlich zu aufwendig wären. Ferner sind zwei Schreib/Lesespeicher 5 und 6 sowie ein nicht flüchtiger Speicher 4 vorgesehen. Der Mikroprozessor 2 ist mit den Speichern 5 und 6 im wesentlichen direkt über einen internen Bus 7 gekoppelt sowie ferner über Adressregister 11 mit dem nicht flüchtigen Speicher 4 sowie über weitere Register 10 mit der Recheneinheit 3. Über die Register 10 werden im wesentlichen Steuersignale zur Steuerung der Funktion der Recheneinheit 3 sowie zur Steuerung der Übertragung von Operanden für die und des Ergebnisses von der Recheneinheit 3 übertragen. Die Operanden selbst werden über Register 14 bis 16 und das Ergebnis über das Register 17 übertragen, und zwar über einen weiteren internen Bus 13, dem vom nicht flüchtigen Speicher 4 sowie vom Speicher 6 Daten zugeführt werden, die Operanden darstellen. Außerdem wird über den Bus 13 das Ergebnis einer in der Recheneinheit 3 durchgeführten Rechnung dem Speicher 6 zugeführt. Da zum Speicher 6 sowohl die Recheneinheit 3 als auch der Mikroprozessor 2 Zugriff haben, können über diesen Speicher auch Daten zwischen den beiden genannten Elementen ausgetauscht werden.

Der interne Bus 13 dient, wie bereits erwähnt, im wesentlichen nur zur Übertragung von Daten. Da die Recheneinheit 3 auch Operationen mit langen Operanden durchführen soll, die mehrere Byte lang sind, ist der Datenbus 13 für eine größere Datenbreite ausgelegt, z.B. für 4 Byte. Dabei wird davon ausgegangen, daß der Speicher 5 auch 4 Byte parallel abgeben kann, entweder durch entsprechenden Aufbau oder durch eine interne Serien-Parallelumsetzung, die mehrere Wörter von einem Byte Länge nacheinander aufnimmt und parallel ausgibt. Eine entsprechende Anordnung ist mit dem Register 12 am Ausgang des nicht flüchtigen Speichers 4 angedeutet, das also vier nacheinander zugeführte Bytes parallel über den Bus 13 weiterleitet. Die Register 14 bis 17 sind so ausgelegt, daß sie 4 Byte parallel aufnehmen und parallel oder gegebenenfalls in kleineren Abschnitten von weniger als 4 Byte abgeben, abhängig davon, welche Wortlänge die Recheneinheit 3 verarbeiten kann. Das Register 17 für die Rechenergebnisse kann ebenfalls entsprechend dem Aufbau der Recheneinheit 3 mehrere Bytes nacheinander oder parallel aufnehmen und jeweils 4 Byte parallel über den internen Bus 13 übertragen.

Die Übertragung der Adressen für die Speicher 4 und 5 von der Recheneinheit 3 aus ist in Fig. 1 der Übersichtlichkeit halber nicht näher dargestellt, da die Adressierung von Speichern jedem Fachmann bekannt ist.

Die Steuerung der Recheneinheit 3 durch die schematisch dargestellten Register 10 in Fig. 1 ist in Fig. 2 etwas deutlicher angegeben. Insgesamt werden drei Sätze von je acht Registern 201 bis 271, 202 bis 272 und 203 bis 273 verwendet. Die Ausgänge aller Register führen auf eine Auswahlschaltung 29, die die Ausgänge von einem dieser Sätze von Registern auswählt und der Recheneinheit 3 zuführt, wobei die Auswahl durch Bitstellen 310 bis 312 eines weiteren Registers 31 gesteuert wird. Dieses Register 31 ist nur einmal vorhanden. Die Eingänge aller Register sind an den internen Datenbus 7 angeschlossen und können von dem Mikroprozessor einzeln zum Schreiben ausgewählt werden, wobei die Auswahlleitungen der Übersichtlichkeit halber weggelassen sind. Die Register 201 bis 271, 202 bis 272 und 203 bis 273 können je ein Byte Daten nur von dem internen Bus 7 aufnehmen und nur an die Auswahlschaltung 29 abgeben, während das Register 31 bitweise schreibbar und lesbar ist, wobei die Bitstellen 310 bis 313 nur von dem internen Datenbus Daten übernehmen und über die Ausgänge die Auswahlschaltung 29 sowie die Recheneinheit 3 steuern, während die Bitstellen 314 bis 317 für weitere Kommunikation zwischen Recheneinheit 3 und Mikroprozessor vorgesehen sind.

Die acht Register, die in jedem Satz von Registern vorhanden sind, dienen folgenden Zwecken, wobei der Einfachheit halber auf die Register nur des ersten Satzes Bezug genommen wird.
Das Register 201 enthält den Operationscode zur Steuerung der Recheneinheit 3 und Information, aus welchem der Speicher 5 oder 6 Operanden entnommen werden.

Das Register 211 gibt die Startadresse für den ersten Operanden an.
Das Register 221 enthält die Startadresse für den zweiten Operanden.
Das Register 231 enthält die Adresse für einen weiteren Operanden, der abhängig von der mit der Recheneinheit 3 auszuführenden Operation in unterschiedlicher
Weise in der Recheneinheit verarbeitet wird. Beispielsweise stellt der Operand, der durch diese Adresse angegeben ist, den Modul bei Modulo-Operationen dar.
Das Register 241 enthält eine Adresse für das Rechenergebnis der Recheneinheit 3. Die Register 251 und 261 dienen zur Angabe der Länge des ersten Operanden bzw. des zweiten Operanden.
Das Register 271 enthält schließlich einen Teil einer Adresse für den nicht flüchtigen Speicher 4, wobei angenommen wird, daß dieser Speicher mehr Speicherplätze hat, als mit einem Byte adressiert werden können.

Mit der beschriebenen Anordnung kann die Rechenleistung der Recheneinheit 3 optimal ausgenutzt werden, da während der Ausführung einer Berechnung unter
Verwendung eines Satzes von Registern, beispielsweise 201 bis 271, der
Mikroprozessor die Register eines weiteren Satzes, beispielsweise die Register 202 bis 272, mit neuen Werten laden kann, und wenn die Recheneinheit 3 einen Satz
Operanden vollständig verarbeitet und das Ergebnis abgegeben hat, kann der
Mikroprozessor mit einem Schritt den Inhalt der Bitstellen 310 bis 312 des Registers 31 ändern, so daß die Adressen für neue Operanden sofort gültig werden und die Berechnung mit diesen Operanden ohne Wartezeit starten kann. Die Angabe der Operanden-Adressen durch Startadresse und Operandenlänge ermöglicht eine sehr einfache, schnelle und registersparende Adressierung der Operanden.

## Patentansprüche

1. Datenverarbeitungseinrichtung mit einem Mikroprozessor (2) und einer zusätzlichen Recheneinheit (3) zur Durchführung spezieller festgelegter Berechnungen, wobei die Recheneinheit (3) über eine Anzahl Register (10) mit dem Mikroprozessor (2) gekoppelt ist, von denen erste Register zur Steuerung der Datenübertragung und zweite Register zur Befehlsübertragung dienen, **dadurch gekennzeichnet, daß** wenigstens zwei Sätze (201-271,202-272,203-273) von ersten und zweiten Registern vorgesehen sind, wobei die Register der verschiedenen Sätze selektiv von dem Mikroprozessor (2) einschreibbar sind, und daß ein drittes Register (31) vorgesehen ist, das ebenfalls von dem Mikroprozessor (2) selektiv und bitweise einschreibbar ist und dessen Inhalt die Auswahl (29) eines Satzes von ersten und zweiten Registern zur Steuerung der Datenübertragung und der Befehlsübertragung angibt.

2. Datenverarbeitungseinrichtung nach Anspruch 1, **dadurch gekennzeichnet, daß** der Inhalt der ersten Register die Adressen und die Länge von wenigstens zwei der in der zusätzlichen Recheneinheit (3) zu verarbeitenden Operanden bestimmt.

3. Tragbarer Datenträger mit einer Datenverarbeitungseinrichtung nach Anspruch 1 oder 2.

## Claims

1. A data processing device which includes a microprocessor (2) and an additional arithmetic unit (3) for executing special, defined calculations, the arithmetic unit (3) being coupled to the microprocessor (2) via a number of registers (10), first registers of which serve for the control of the data transfer whereas second registers serve for the transfer of instructions, **characterized in that** there are provided at least two sets of first and second registers (201-271, 202 -272, 203-273), the registers of the various sets being selectively writable by the microprocessor (2), and that there is provided a third register (31) which can also be selectively written bit by bit by the microprocessor (2) and whose content indicates the selection (29) of a set of first and second registers for controlling the data transfer and the transfer of instructions.

2. A data processing device as claimed in Claim 1, **characterized in that** the content of the first registers determines the addresses and the length of at least two operands to be processed in the additional arithmetic unit (3).

3. A portable data carrier provided with a data processing device as claimed in Claim 1 or 2.

## Revendications

1. Dispositif de traitement de données avec un microprocesseur (2) et une unité de calcul (3) additionnelle pour l'exécution de calculs définis spécifiquement, l'unité de calcul (3) étant couplée par l'intermédiaire d'un nombre de registres (10) avec le microprocesseur (2) dont le premier registre sert à la commande de la transmission de données et le deuxième registre à la transmission d'ordres, **caractérisé en ce qu'**au moins deux jeux (201-271, 202-272, 203-273) des premier et deuxième registres sont prévus, les registres des différents jeux étant sélectivement inscriptibles par le microprocesseur (2) et qu'il est prévu un troisième registre (31) qui est également inscriptible sélectivement et par bits par le microprocesseur (2) et dont le contenu indique la sélection (29) d'un jeu des premier et deuxième registres pour la commande de la transmission de données et de la transmission d'ordres.

2. Dispositif de traitement de données selon la revendication 1, **caractérisé en ce que** le contenu du premier registre détermine les adresses et la longueur d'au moins deux opérandes à traiter dans l'unité de calcul (3) supplémentaire.

3. Support de données portable avec un dispositif de traitement de données selon l'une des revendications 1 ou 2.
